(19) Europäisches Patentamt
European Patent Office
Office européen des brevets

(11) **EP 3 034 849 A1**

(12) **EUROPEAN PATENT APPLICATION**

(43) Date of publication:
**22.06.2016 Bulletin 2016/25**

(51) Int Cl.:
***F02K 3/06*** *(2006.01)*     ***F02K 3/072*** *(2006.01)*
***F02C 7/36*** *(2006.01)*

(21) Application number: **15199916.6**

(22) Date of filing: **14.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.12.2014 US 201414573003**

(71) Applicant: **United Technologies Corporation Farmington, CT 06032 (US)**

(72) Inventors:
- SCHWARZ, Frederick M.
  **Glastonbury, CT Connecticut 06033 (US)**
- SUCIU, Gabriel L.
  **Glastonbury, CT Connecticut 06033 (US)**
- KUPRATIS, Daniel Bernard
  **Wallingford, CT Connecticut 06492 (US)**
- ACKERMANN, William K.
  **East Hartford, CT Connecticut 06118-1905 (US)**

(74) Representative: **Leckey, David Herbert Dehns St Bride's House 10 Salisbury Square London EC4Y 8JD (GB)**

(54) **GAS TURBINE ENGINE WITH HIGH SPEED LOW PRESSURE TURBINE SECTION**

(57)     A gas turbine engine includes a very high speed low pressure turbine (46) such that a quantity defined by the exit area of the low pressure turbine (46) multiplied by the square of the low pressure turbine rotational speed compared to the same parameters for the high pressure turbine (54) is at a ratio between about 0.5 and about 1.5.

FIG.2

EP 3 034 849 A1

**Description**

**BACKGROUND OF THE INVENTION**

This application relates to a gas turbine engine wherein the low pressure turbine section is rotating at a higher speed and centrifugal pull stress relative to the high pressure turbine section speed and centrifugal pull stress than prior art engines.

Gas turbine engines are known, and typically include a fan delivering air into a low pressure compressor section. The air is compressed in the low pressure compressor section, and passed into a high pressure compressor section. From the high pressure compressor section the air is introduced into a combustion section where it is mixed with fuel and ignited. Products of this combustion pass downstream over a high pressure turbine section, and then a low pressure turbine section.

Traditionally, on many prior art engines the low pressure turbine section has driven both the low pressure compressor section and a fan directly. As fuel consumption improves with larger fan diameters relative to core diameters it has been the trend in the industry to increase fan diameters. However, as the fan diameter is increased, high fan blade tip speeds may result in a decrease in efficiency due to compressibility effects. Accordingly, the fan speed, and thus the speed of the low pressure compressor section and low pressure turbine section (both of which historically have been coupled to the fan via the low pressure spool), have been a design constraint. More recently, gear reductions have been proposed between the low pressure spool (low pressure compressor section and low pressure turbine section) and the fan.

**SUMMARY**

In a featured embodiment, a gas turbine engine comprises a fan, a compressor section in fluid communication with the fan, a combustion section in fluid communication with the compressor section, and a turbine section in fluid communication with the combustion section. The turbine section includes a first turbine section and a second turbine section. The first turbine section has a first exit area at a first exit point and rotates at a first speed. The second turbine section has a second exit area at a second exit point and rotates at a second speed, which is higher than the first speed. A first performance quantity is defined as the product of the first speed squared and the first area. A second performance quantity is defined as the product of the second speed squared and the second area. A ratio of the first performance quantity to the second performance quantity is between about 0.5 and about 1.5. A gear reduction is included between the fan and a low spool is driven by the first turbine section such that the fan rotates at a lower speed than the first turbine section.

In another embodiment according to the previous embodiment, a gear ratio of the gear reduction is greater than about 2.3.

In another embodiment according to any of the previous embodiments, the gear ratio is greater than about 2.5.

In another embodiment according to any of the previous embodiments, there is a third turbine section. The first turbine section drives the fan, and the second and third turbine sections each drive a compressor rotor of the compressor section.

In another embodiment according to any of the previous embodiments, the gear reduction is positioned intermediate the fan and a compressor rotor driven by the first turbine section.

In another embodiment according to any of the previous embodiments, the gear reduction is positioned intermediate the first turbine section and a compressor rotor driven by the first turbine section.

These and other features may be best understood from the following drawings and specification.

**BRIEF DESCRIPTION OF THE DRAWINGS**

Figure 1 shows a gas turbine engine.
Figure 2 schematically shows the arrangement of the low and high spool, along with the fan drive.
Figure 3 shows another embodiment.
Figure 4 shows yet another embodiment.

**DETAILED DESCRIPTION**

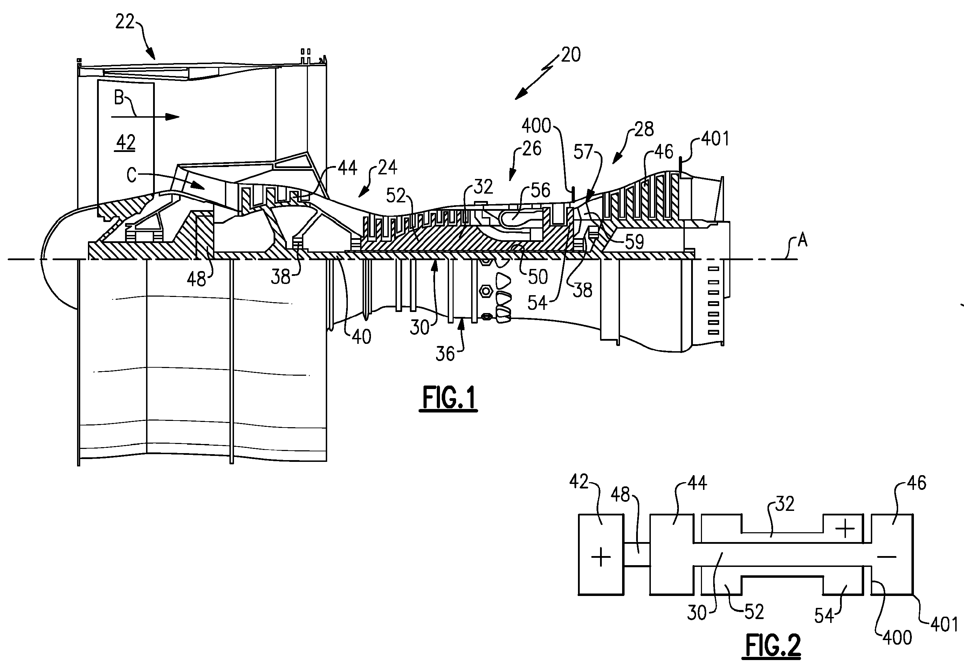

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B while the compressor section 24 drives air along a core flow path C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure (or first) compressor section 44 and a low pressure (or first) turbine section 46. The inner shaft 40 is connected to the fan 42 through a geared architecture 48 to drive the fan 42 at a lower speed than the low speed spool 30. The high speed spool 32 includes an outer shaft 50 that interconnects a high pressure (or second) compressor section 52 and high pressure (or second) turbine section 54. A combustor 56 is arranged between the high pressure compressor section 52 and the high pressure turbine section 54. A mid-turbine frame 57 of the engine static structure 36 is arranged generally between the high pressure turbine section 54 and the low pressure turbine section 46. The mid-turbine frame 57 further supports bearing systems 38 in the turbine section 28. As used herein, the high pressure turbine section experiences higher pressures than the low pressure turbine section. A low pressure turbine section is a section that powers a fan 42. The inner shaft 40 and the outer shaft 50 are concentric and rotate via bearing systems 38 about the engine central longitudinal axis A which is collinear with their longitudinal axes. the high and low spools can be either co-rotating or counter-rotating.

The core airflow C is compressed by the low pressure compressor section 44 then the high pressure compressor section 52, mixed and burned with fuel in the combustor 56, then expanded over the high pressure turbine section 54 and low pressure turbine section 46. The mid-turbine frame 57 includes airfoils 59 which are in the core airflow path. The turbine sections 46, 54 rotationally drive the respective low speed spool 30 and high speed spool 32 in response to the expansion.

The engine 20 in one example is a high-bypass geared aircraft engine. The bypass ratio is the amount of air delivered into bypass path B divided by the amount of air into core path C. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low pressure turbine section 46 has a pressure ratio that is greater than about 5. In one disclosed embodiment, the engine 20 bypass ratio is greater than about ten (10:1), the fan diameter is significantly larger than that of the low pressure compressor section 44, and the low pressure turbine section 46 has a pressure ratio that is greater than about 5:1. In some embodiments, the high pressure turbine section may have two or fewer stages. In contrast, the low pressure turbine section 46, in some embodiments, has between 3 and 6 stages. Further the low pressure turbine section 46 pressure ratio is total pressure measured prior to inlet of low pressure turbine section 46 as related to the total pressure at the outlet of the low pressure turbine section 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ("TSFC"). TSFC is the industry standard parameter of the rate of lbm of fuel being burned per hour divided by lbf of thrust the engine produces at that flight condition. "Low fan pressure ratio" is the ratio of total pressure across the fan blade alone, before the fan exit guide vanes. The low fan pressure ratio as disclosed herein according to one non-limiting embodiment is less than about 1.45. "Low corrected fan tip speed" is the actual fan tip speed in ft/sec divided by an industry standard temperature correction of [(Ram Air Temperature deg R) / 518.7)^0.5]. The "Low corrected fan tip speed" as disclosed herein according to one non-limiting embodiment is less than about 1150 ft / second (350.5 m/s). Further, the fan 42 may have 26 or fewer blades.

An exit area 400 is shown, in Figure 1 and Figure 2, at the exit location for the high pressure turbine section 54. An exit area for the low pressure turbine section is defined at exit 401 for the low pressure turbine section. As shown in Figure 2, the turbine engine 20 may be counter-rotating. This means that the low pressure turbine section 46 and low pressure compressor section 44 rotate in one direction, while the high pressure spool 32, including high pressure turbine section 54 and high pressure compressor section 52 rotate in an opposed direction. The gear reduction 48, which may be, for example, an epicyclic transmission (e.g., with a sun, ring, and star gears), is selected such that the fan 42 rotates in the same direction as the high spool 32. With this arrangement, and with the other structure as set forth above, including the various quantities and operational ranges, a very high speed can be provided to the low pressure spool.

Low pressure turbine section and high pressure turbine section operation are often evaluated looking at a performance quantity which is the exit area for the turbine section multiplied by its respective speed squared. This performance quantity ("PQ") is defined as:

$$Equation\ 1:\quad PQ_{ltp} = (A_{lpt} \times V_{lpt}^{2})$$

$$Equation\ 2:\quad PQ_{hpt} = (A_{hpt} \times V_{hpt}^{2})$$

where $A_{lpt}$ is the area of the low pressure turbine section at the exit thereof (e.g., at 401), where $V_{lpt}$ is the speed of the low pressure turbine section, where $A_{hpt}$ is the area of the high pressure turbine section at the exit thereof (e.g., at 400), and where $V_{hpt}$ is the speed of the low pressure turbine section.

Thus, a ratio of the performance quantity for the low pressure turbine section compared to the performance quantify for the high pressure turbine section is:

$$Equation\ 3:\quad (A_{lpt} \times V_{lpt}^{2})/(A_{hpt} \times V_{hpt}^{2}) = PQ_{ltp}/\ PQ_{hpt}$$

In one turbine embodiment made according to the above design, the areas of the low and high pressure turbine sections are 557.9 in$^2$ (0.3599 m$^2$) and 90.67 in$^2$ (0.0585 m$^2$), respectively. Further, the speeds of the low and high pressure turbine sections are 10179 rpm and 24346 rpm, respectively. Thus, using Equations 1 and 2 above, the performance quantities for the low and high pressure turbine sections are:

$$Equation\ 1:\quad PQ_{ltp} = (A_{lpt} \times V_{lpt}^{2}) = (557.9\ in^{2})(10179\ rpm)^{2} = 57805157673.9\ in^{2}\,rpm^{2}$$

$$Equation\ 2:\quad PQ_{hpt} = (A_{hpt} \times V_{hpt}^{2}) = (90.67\ in^{2})(24346\ rpm)^{2} = 53742622009.72\ in^{2}\,rpm^{2}$$

and using Equation 3 above, the ratio for the low pressure turbine section to the high pressure turbine section is:

$$Ratio = PQ_{ltp}/\ PQ_{hpt} = 57805157673.9\ in^{2}\,rpm^{2}\ /\ 53742622009.72\ in^{2}\,rpm^{2} = 1.075$$

In another embodiment, the ratio was about 0.5 and in another embodiment the ratio was about 1.5. With $PQ_{ltp}/PQ_{hpt}$ ratios in the 0.5 to 1.5 range, a very efficient overall gas turbine engine is achieved. More narrowly, $PQ_{ltp}/\ PQ_{hpt}$ ratios of above or equal to about 0.8 are more efficient. Even more narrowly, $PQ_{ltp}/\ PQ_{hpt}$ ratios above or equal to 1.0 are even more efficient. As a result of these $PQ_{ltp}/\ PQ_{hpt}$ ratios, in particular, the turbine section can be made much smaller than in the prior art, both in diameter and axial length. In addition, the efficiency of the overall engine is greatly increased.

The low pressure compressor section is also improved with this arrangement, and behaves more like a high pressure compressor section than a traditional low pressure compressor section. It is more efficient than the prior art, and can provide more work in fewer stages. The low pressure compressor section may be made smaller in radius and shorter in length while contributing more toward achieving the overall pressure ratio design target of the engine.

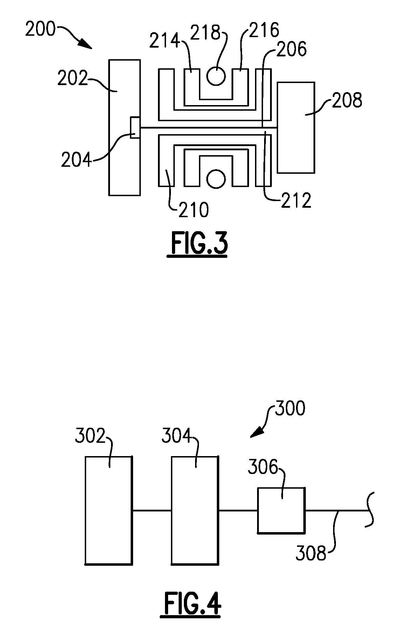

Figure 3 shows an embodiment 200, wherein there is a fan drive turbine 208 driving a shaft 206 to in turn drive a fan rotor 202. A gear reduction 204 may be positioned between the fan drive turbine 208 and the fan rotor 202. This gear reduction 204 may be structured and operate like the gear reduction disclosed above. A compressor rotor 210 is driven by an intermediate pressure turbine 212, and a second stage compressor rotor 214 is driven by a turbine rotor 216. A combustion section 218 is positioned intermediate the compressor rotor 214 and the turbine section 216.

Figure 4 shows yet another embodiment 300 wherein a fan rotor 302 and a first stage compressor 304 rotate at a common speed. The gear reduction 306 (which may be structured as disclosed above) is intermediate the compressor rotor 304 and a shaft 308 which is driven by a low pressure turbine section.

The Figure 5 or 6 engines may be utilized with the features disclosed above.

While this invention has been disclosed with reference to one embodiment, it should be understood that certain modifications would come within the scope of this invention. For that reason, the following claims should be studied to determine the true scope and content of this invention.

**Claims**

1. A gas turbine engine (20) comprising:

   a fan (22);
   a compressor section (24) in fluid communication with the fan (22);
   a combustion section (26) in fluid communication with the compressor section (24);
   a turbine section (28) in fluid communication with the combustion section (26),
   wherein the turbine section (28) includes a first turbine section (46) and a second turbine section (54),
   wherein said first turbine section (46) has a first exit area ($A_{lpt}$) at a first exit point and rotates at a first speed ($V_{lpt}$),
   wherein said second turbine section (54) has a second exit area ($A_{hpt}$) at a second exit point and rotates at a second speed ($V_{hpt}$), which is higher than the first speed,
   wherein a first performance quantity ($PQ_{lpt}$) is defined as the product of the first speed squared and the first area,
   wherein a second performance quantity ($PQ_{hpt}$) is defined as the product of the second speed squared and the second area:

      wherein a ratio of the first performance quantity ($PQ_{lpt}$) to the second performance quantity ($PQ_{hpt}$) is between about 0.5 and about 1.5; and
      a gear reduction (48) is included between said fan (22) and a low spool driven by the first turbine section (46) such that the fan (22) rotates at a lower speed than the first turbine section (46).

2. The gas turbine engine as set forth in claim 1, wherein a gear ratio of said gear reduction is greater than about 2.3.

3. The gas turbine engine as set forth in claim 2, wherein said gear ratio is greater than about 2.5.

4. The gas turbine engine as set forth in any preceding claim, wherein there is a third turbine section (22), the first turbine section (208) driving the fan, and the second (216) and third (212) turbine sections each driving a compressor rotor of the compressor section (24).

5. The gas turbine engine as set forth in any preceding claim, wherein the gear reduction (48) is positioned intermediate the fan (42) and a compressor rotor driven by the first turbine section (46).

6. The gas turbine engine as set forth in any preceding claim, wherein the gear reduction (306) is positioned intermediate the first turbine section and a compressor rotor (304) driven by the first turbine section.

FIG.1

FIG.2

**FIG.3**

**FIG.4**

Europäisches
Patentamt

European
Patent Office

Office européen
des brevets

## EUROPEAN SEARCH REPORT

Application Number

EP 15 19 9916

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/130479 A1 (SCHWARZ FREDERICK M [US] ET AL) 15 May 2014 (2014-05-15) * paragraph [0005] - paragraph [0043]; figures 1-3 * | 1-6 | INV. F02K3/06 F02K3/072 F02C7/36 |
| X | WO 2014/018142 A2 (UNITED TECHNOLOGIES CORP [US]) 30 January 2014 (2014-01-30) * paragraph [0005] - paragraph [0042]; figures 1-3 * | 1-6 | |
| X | US 2013/318998 A1 (SCHWARZ FREDERICK M [US] ET AL) 5 December 2013 (2013-12-05) * paragraph [0027] - paragraph [0038]; figures 1-2 * | 1-6 | |
| A | US 3 886 737 A (GRIEB HUBERT) 3 June 1975 (1975-06-03) * column 5, line 15 - line 35; figure 4 * | 4 | |
| A | US 2013/223986 A1 (KUPRATIS DANIEL BERNARD [US] ET AL) 29 August 2013 (2013-08-29) * paragraph [0038] - paragraph [0045]; figure 1 * | 4,6 | TECHNICAL FIELDS SEARCHED (IPC) F02K F02C |
| A | US 8 834 099 B1 (TOPOL DAVID A [US] ET AL) 16 September 2014 (2014-09-16) * column 6, line 65 - column 7, line 3; figure 3 * | 6 | |

The present search report has been drawn up for all claims

| Place of search | Date of completion of the search | Examiner |
|---|---|---|
| The Hague | 4 May 2016 | Robelin, Bruno |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 15 19 9916

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2016

| Patent document cited in search report | | Publication date | Patent family member(s) | | Publication date |
|---|---|---|---|---|---|
| US 2014130479 | A1 | 15-05-2014 | CA<br>EP<br>JP<br>US<br>WO | 2889618 A1<br>2920445 A1<br>2015536409 A<br>2014130479 A1<br>2014078157 A1 | 22-05-2014<br>23-09-2015<br>21-12-2015<br>15-05-2014<br>22-05-2014 |
| WO 2014018142 | A2 | 30-01-2014 | EP<br>WO | 2841718 A2<br>2014018142 A2 | 04-03-2015<br>30-01-2014 |
| US 2013318998 | A1 | 05-12-2013 | EP<br>US<br>WO | 2855875 A2<br>2013318998 A1<br>2014025441 A2 | 08-04-2015<br>05-12-2013<br>13-02-2014 |
| US 3886737 | A | 03-06-1975 | DE<br>GB<br>US | 2241283 A1<br>1436796 A<br>3886737 A | 21-03-1974<br>26-05-1976<br>03-06-1975 |
| US 2013223986 | A1 | 29-08-2013 | EP<br>SG<br>US<br>WO | 2820249 A2<br>11201405143X A<br>2013223986 A1<br>2013165521 A2 | 07-01-2015<br>30-10-2014<br>29-08-2013<br>07-11-2013 |
| US 8834099 | B1 | 16-09-2014 | NONE | | |

EPO FORM P0459

For more details about this annex : see Official Journal of the European Patent Office, No. 12/82